# EUROPEAN PATENT APPLICATION

(11) **EP 4 269 057 A1**
(43) Date of publication of application: **01.11.2023**
(21) Application number: 21909787.0
(22) Date of filing: 30.07.2021
(51) Int. Cl.: B29B 9/06

(54) **CUTTER BLADE, GRANULATION DEVICE, AND METHOD FOR MANUFACTURING CUTTER BLADE**

(30) Priority: 24.12.2020 JP 2020214766
(71) Applicant: The Japan Steel Works, Ltd., Tokyo 141-0032 (JP)
(72) Inventor: UEDA Naoki, Tokyo 141-0032 (JP); TAYA Ryusei, Tokyo 141-0032 (JP); HIRAMATSU Seiya, Tokyo 141-0032 (JP)
(74) Representative: Lahrtz, Fritz
(86) International application number: PCT/JP2021/028458
(87) International publication number: WO 2022/137627

(57) **Abstract**

A cutter blade (1) according to an embodiment is provided with: an insert member (140) including a blade tip part (120) that slides along a plate surface (204) of a die plate (201) to cut off a material (206) as the material (206) is extruded from a hole (205) formed in the plate surface (204) onto the plate surface (204), and an insertion part (130) that has a first surface (130a) and a second surface (130b) facing the first surface (130a) and is connected to the blade tip part (120); and a body part (110) that sandwiches the first surface (130a) and the second surface (130b) to support the insert member (140).

## Description

### Technical Field

The present invention relates to a cutter blade, a granulation apparatus, and a method for manufacturing a cutter blade.

### Background Art

Patent Literature 1 discloses a cutter blade for cutting a resin material extruded from holes formed in a die plate.

### Citation List

### Patent Literature

Patent Literature 1: Japanese Unexamined Patent Application Publication No. H11-165316

### Summary of Invention

### Technical Problem

When a cutter blade disclosed in Patent Literature 1 or the like is used, it is conceivable to join a hardened layer to the cutter blade by brazing in order to improve the durability of its cutting edge. However, since the cutter blade needs to be heated to about 1,000°C to carry out the brazing, its cutting edges are deformed. Since additional machining needs to be performed to correct the deformation of the cutting edge, the manufacturing cost increases.

Other problems to be solved and novel features will become apparent from descriptions in this specification and accompanying drawings.

### Solution to Problem

A cutter blade according to an embodiment includes: an insert member including a cutting-edge part configured to slide along a plate surface of a die plate, the plate surface having a hole formed therein, and thereby to cut a material extruded from the hole onto the plate surface, and an insert part having a first surface and a second surface opposed to the first surface, the insert part being connected to the cutting-edge part; and a main part configured to support the insert member by sandwiching the first and second surfaces.

A cutter blade according to an embodiment includes: an insert member including a cutting-edge part configured to slide along a plate surface of a die plate, the plate surface having a hole formed therein, and thereby to cut a material extruded from the hole onto the plate surface, and an insert part connected to the cutting-edge part, the insert member containing a metal as its material; and a main part configured to support the insert member by sandwiching the insert part, the main part containing at least one of a resin, a metal, and ceramic as its material.

A granulation apparatus according to an embodiment includes: the above-described cutter blade; a cutter blade holder part to which the cutter blade is connected; and the above-described die plate.

A method for manufacturing a cutter blade according to an embodiment includes: an insert member preparation step of preparing an insert member, the insert member including a cutting-edge part configured to slide along a plate surface of a die plate, the plate surface having a hole formed therein, and thereby to cut a material extruded from the hole onto the plate surface, and an insert part having a first surface and a second surface opposed to the first surface, the insert part being connected to the cutting-edge part; a main part preparation step of preparing a main part; and an attaching step of attaching the insert member to the main part so that the insert member is supported in such a manner that the first and second surfaces are sandwiched in the main part.

A method for manufacturing a cutter blade according to an embodiment includes: an insert member preparation step of preparing an insert member including a cutting-edge part configured to slide along a plate surface of a die plate, the plate surface having a hole formed therein, and thereby to cut a material extruded from the hole onto the plate surface, and an insert part connected to the cutting-edge part, the insert member containing a metal as its material; an insert member disposing step of disposing the insert member in a cavity of a mold; and an insert molding step of: charging a material containing at least one of a molten resin, a molten metal, and a ceramic powder in the cavity, solidifying the material, and thereby supporting the insert member by sandwiching the insert part; and molding a main part containing at least one of a resin, a metal, and ceramic as its material; and a removal step of removing a cutter blade including the insert member and the main part from the mold.

### Advantageous Effects of Invention

According to the above-described embodiment, it is possible to provide a cutter blade, a granulation apparatus, and a method for manufacturing a cutter blade capable of reducing the manufacturing cost.

### Brief Description of Drawings

Fig. 1 is a configuration diagram showing an example of a granulation apparatus using cutter blades according to a first embodiment;
Fig. 2 is a perspective diagram showing an example of a die plate in the granulation apparatus using cutter blades according to the first embodiment;
Fig. 3 is a perspective view showing an example of a cutter blade according to the first embodiment;
Fig. 4 is a side view showing the example of the cutter blade according to the first embodiment;
Fig. 5 is a front view showing the example of the cutter blade according to the first embodiment;
Fig. 6 is an exploded perspective view showing the example of the cutter blade according to the first embodiment;
Fig. 7 is a side view showing an example of a main part of the cutter blade according to the first embodiment;
Fig. 8 is a side view showing an example of an insert member of the cutter blade according to the first embodiment;
Fig. 9 is a flowchart showing an example of one of methods for manufacturing a cutter blade according to the first embodiment, in which an insert member is attached in a groove of a main part;
Fig. 10 shows an example of an attaching step of attaching an insert member to a main part in the method for manufacturing a cutter blade according to the first embodiment;
Fig. 11 is a flowchart showing an example of one of methods for manufacturing a cutter blade according to the first embodiment, in which insert molding is performed;
Fig. 12 is a perspective view showing an example of a cutter blade according to a second embodiment;
Fig. 13 is an exploded perspective view showing the example of the cutter blade according to the second embodiment;
Fig. 14 is a perspective view showing an example of a cutter blade according to a third embodiment; and
Fig. 15 is an exploded perspective view showing the example of the cutter blade according to the third embodiment.

### Description of Embodiments

For clarifying the description, the following description and the drawings are partially omitted and simplified as appropriate. Further, the same symbols are assigned to the same or corresponding components throughout the drawings, and redundant descriptions thereof are omitted as appropriate.

### (First Embodiment)

A cutter blade and a method for manufacturing a cutter blade according to the first embodiment will be described. Firstly, a granulation apparatus will be described as an example of an apparatus using cutter blades. After that, a cutter blade and a method for manufacturing a cutter blade will be described.

### <Underwater Granulation Apparatus>

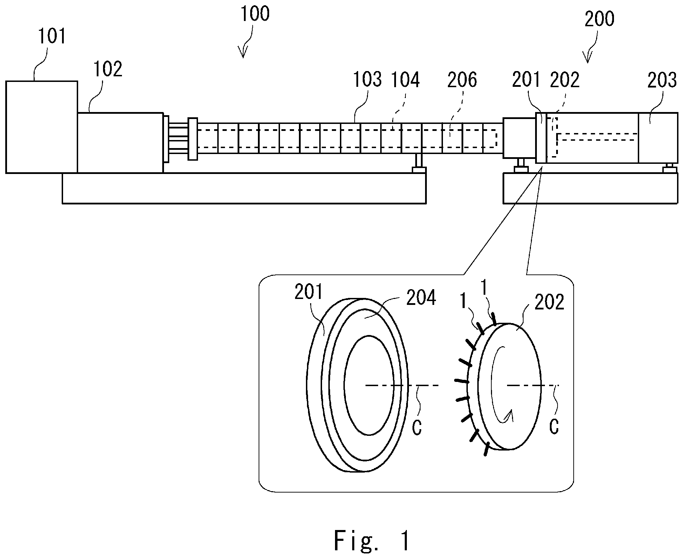

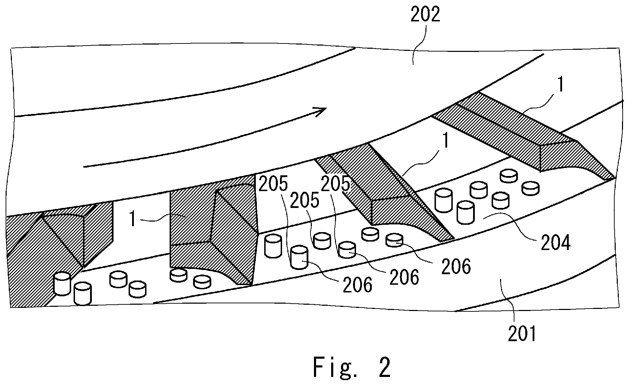

Fig. 1 is a configuration diagram showing an example of a granulation apparatus using cutter blades according to a first embodiment. Fig. 2 is a perspective view showing an example of a die plate in the granulation apparatus using cutter blades according to the first embodiment. In Fig. 1, an exploded view of a part of the granulation apparatus is shown inside a box.

As shown in Figs. 1 and 2, the granulation apparatus is, for example, an underwater granulation apparatus 200. The underwater granulation apparatus 200 is connected to the downstream side of an extrusion apparatus 100. The extrusion apparatus 100 includes a drive unit 101, a speed reducer 102, a cylinder 103 and a screw 104. The drive unit 101, which is, for example, a motor, transmits its rotation adjusted by the speed reducer 102 to the screw 104. In this way, the screw 104 is rotated by the adjusted power source of the drive unit 101 inside the cylinder 103.

A material 206 supplied into the cylinder 103 from a predetermined position of the cylinder 103 is extruded to the underwater granulation apparatus 200 side by the rotating screw 104. The supplied material 206 is, for example, a resin material. The extrusion apparatus 100 plasticizes and kneads, for example, a resin material by heating it inside the cylinder 103 and by the rotation of the screw 104, and extrudes the plasticized and kneaded resin material to the underwater granulation apparatus 200 side as a molten resin.

The underwater granulation apparatus 200 includes a die plate 201, a cutter blade holder part 202, and a drive unit 203. The die plate 201 and the cutter blade holder part 202 are disposed underwater. The die plate 201 has a plate surface 204. A plurality of holes 205 are formed in the plate surface 204. The material 206 extruded by the rotating screw 104 is extruded from the holes 205 formed in the plate surface 204 onto the plate surface 204. The material 206 extruded onto the plate surface 204 is, for example, a molten resin. In Fig. 2, reference numerals are added to only some of the holes 205 and some of pieces of the material 206 extruded therefrom in order to simplify the drawing.

The die plate 201 and the plate surface 204 have a central axis C. The cutter blade holder part 202 is disposed so as to be opposed to the die plate 201. The cutter blade holder part 202 is rotated about the central axis C by the power source of the drive unit 203. The cutter blade holder part 202 holds a plurality of cutter blades 1. In Fig. 1, reference numerals are added to only some of the cutter blades 1 in order to simplify the drawing.

For example, the cutter blades 1 are held (i.e., positioned) at equal intervals on the peripheral edge of the circular cutter blade holder part 202. Further, as the cutter blade holder part 202 rotates, each of the cutter blades 1 rotates over the plate surface 204. Each cutter blade 1 slides along the plate surface 204, and thereby cuts a plurality of piece of the material 206 extruded from holes 205 onto the plate surface 204. For example, a plurality of pieces of the molten resin extruded from the holes 205 onto the plate surface 204 are cut by the cutter blades 1. The plurality of cut pieces of the molten resin solidify underwater and become resin pellets.

### <Cutter Blade>

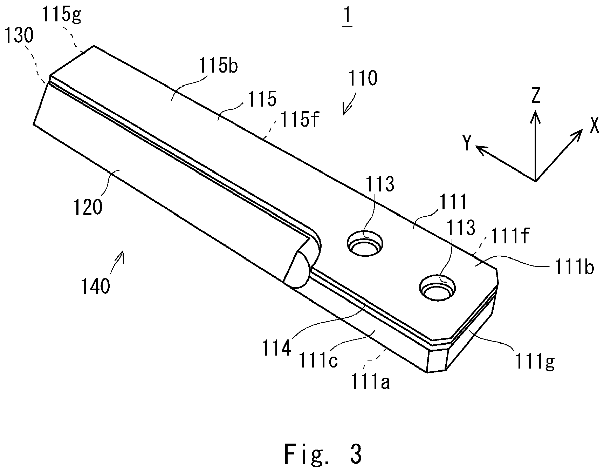

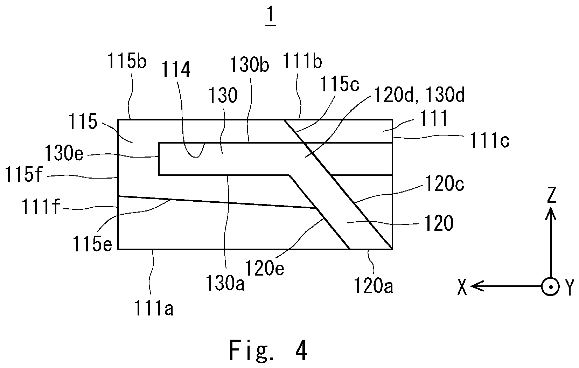

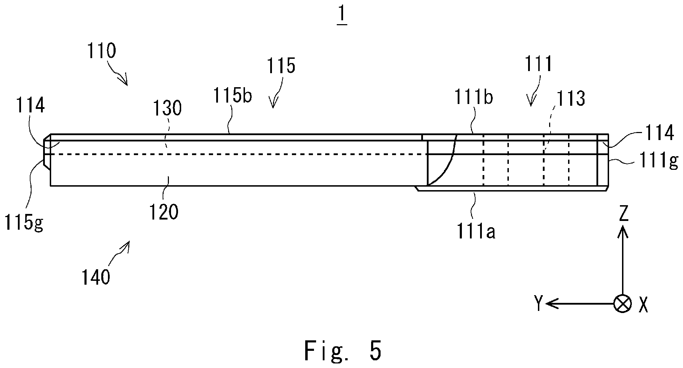

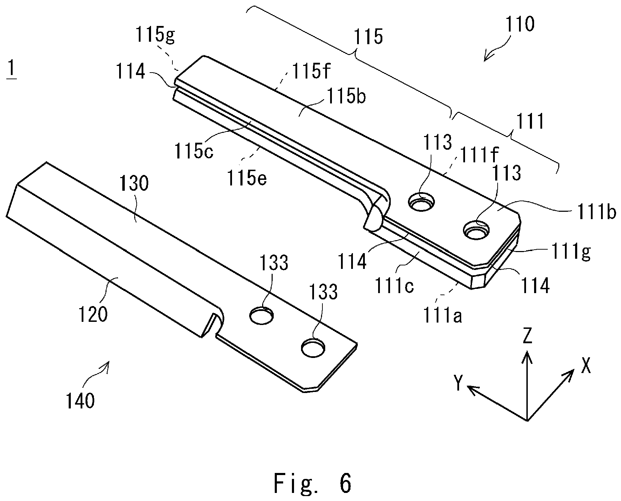

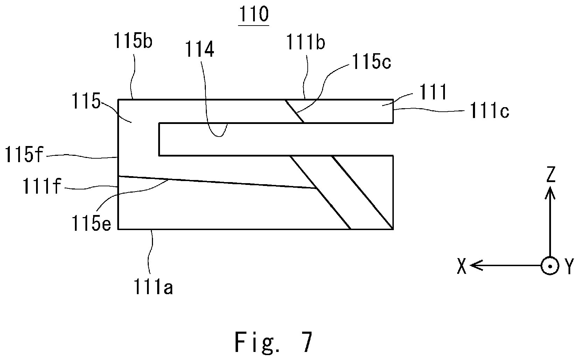

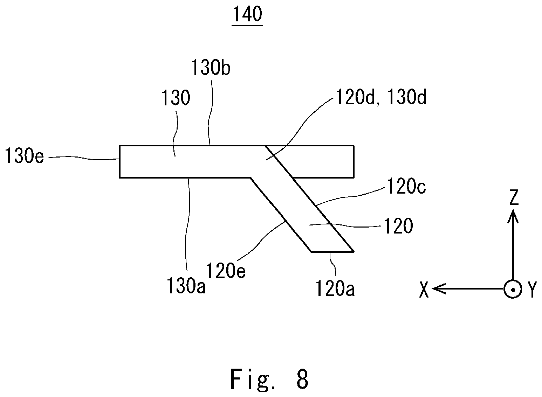

Next, the cutter blade 1 will be described. Fig. 3 is a perspective view showing an example of the cutter blade 1 according to the first embodiment. Fig. 4 is a side view showing the example of the cutter blade 1 according to the first embodiment. Fig. 5 is a front view showing the example of the cutter blade 1 according to the first embodiment. Fig. 6 is an exploded perspective view showing the example of the cutter blade 1 according to the first embodiment. Fig. 7 is a side view showing an example of a main part of the cutter blade 1 according to the first embodiment. Fig. 8 is a side view showing an example of an insert member of the cutter blade according to the first embodiment. As shown in Figs. 3 to 8, the cutter blade 1 includes the main part 110 and the insert member 140. The main part 110 supports the insert member 140 by sandwiching the insert member 140 therein.

Note that an XYZ-orthogonal axis system is introduced to explain the cutter blade 1. In the state in which the cutter blade 1 is placed over the plate surface 204, the direction perpendicular to the plate surface 204 is defined as the Z-axis direction. The +Z axis direction is referred to as upward and the -Z axis direction is referred to as downward. The terms "upward" and "downward" are used just for explaining the cutter blade 1, and do not necessarily indicate the directions when the actual cutter blade 1 is used. The direction in which the cutting edge of the cutter blade 1 extends is defined as the Y-direction. The direction perpendicular to the Y- and Z-axis directions is defined as the X-axis direction. Each of the components/structures of the main part 110 and the insert member 140 of the cutter blade 1 will be described hereinafter. Note that reference numerals (or symbols) of some of the components/structures are omitted in order to simplify the drawing.

### <Main Part>

The main part 110 includes an attaching part 111 and a ridge part 115. The attaching part 111 and the ridge part 115 are connected to each other in the Y-axis direction. As its material, the main part 110 contains, for example, a metal such as stainless steel. Alternatively, the main part 110 may contain, for example, a resin such as a heat-resistant resin as its material. Note that the material of the main part 110 is not limited to those containing a metal or a resin, but may be a material containing ceramic, a material containing fibers or the like, or a resin or the like containing a filler.

The attaching part 111 is fixed to the cutter blade holder part 202 which transmits the power for sliding the cutter blade 1 along the plate surface 204. The attaching part 111 is formed, for example, in a part of the main part 110 on the -Y axis direction side thereof. The attaching part 111 has, for example, a quadrangular prism shape, and has a bottom surface 111a, an upper surface 111b, a front surface 111c, and a rear surface 111f. The bottom surface 111a is the surface on the -Z axis direction side, and the upper surface 111b is the surface on the +Z axis direction side. The front surface 111c is the surface on the -X axis direction side, and the rear surface 111f is on the surface on the +X axis direction side.

In the attaching part 111, holes 113, which are used to fix attaching part 111 to the cutter blade holder part 202, are formed. The number of holes 113 may be only one or may be more than one. The holes 113 penetrate (i.e., extend) from the upper surface 111b to the bottom surface 111a. For example, the cutter blade 1 is fixed to the cutter blade holder part 202 by inserting bolts into the holes 113 of the attaching part 111 and holes formed in the cutter blade holder part 202. Note that structures or the like other than the holes 113 may be formed in the attaching part 111 as long as they can be used to fix the attaching part 111 to the cutter blade holder part 202.

A groove 114 for holding the insert member 140 may be formed in the attaching part 111. The groove 114 is formed, for example, in the front surface 111c on the -X axis direction side of the attaching part 111. The groove 114 extends in the Y-axis direction in the front surface 111c. That is, the mouth of the groove 114 in the front surface 111c extends in the Y-axis direction. The groove 114 is formed in the +X axis direction from the mouth in the front surface 111c. The bottom of the groove 114 is opposed to the rear surface 111f. The groove 114 may extend to the end face 111g of the attaching part 111 on the -Y axis direction side thereof. That is, the groove 114 may be formed in the front surface 111c and in the end face 111g. Therefore, the mouth of the groove 114 extends to the front surface 111c and to the end face 111g. The mouth of the groove 114 in the end face 111g extends in the X-axis direction.

The ridge part 115 is formed, for example, in a part of the main part 110 on the +Y axis direction side thereof. In this way, the ridge part 115 connects to the +Y axis direction side of the attaching part 111. The ridge part 115 extends, for example, in the Y-axis direction. The ridge part 115 has an upper surface 115b, a front surface 115c, a dug-in surface 115e, and a rear surface 115f. The upper surface 115b is the surface on the +Z axis direction side, and the front surface 115c is the surface on the -X axis direction side. The dug-in surface 115e is the surface on the -Z axis direction side, and the rear surface 111f is the surface on the +X axis direction side. The ridge part 115 has a columnar shape extending in the Y-axis direction, with the upper surface 115b, the front surface 115c, the dug-in surface 115e, and the rear surface 115f being its peripheral surfaces.

The upper surface 115b is, for example, flush with the upper surface 111b of the attaching part 111. The groove 114 for holding the insert member 140 is formed in the front surface 115c. That is, the groove 114 of the attaching part 111 is also formed in the ridge part 115. The groove 114 extends in the Y-axis direction in the front surface 115c. That is, the mouth of the groove 114 in the front surface 115c extends in the Y-axis direction. The groove 114 is formed (i.e., extends) in the +X axis direction from the mouth in the front surface 115c. The bottom of the groove 114 is opposed to the rear surface 115f. The groove 114 may extend to the end face 115g of the ridge part 115 on the +Y axis direction side thereof. That is, the groove 114 may be formed in the front surface 115c and in the end face 115g. Therefore, the mouth of the groove 114 extends to the front surface 115c and to the end face 115g. The mouth of the groove 114 in the end face 115g extends in the X-axis direction.

### <Insert Member>

The insert member 140 includes a cutting-edge part 120 and an insert part 130. The cutting-edge part 120 and the insert part 130 are, for example, plate-like elements. The insert part 130 is connected to the cutting-edge part 120. Specifically, the insert part 130 is connected to the end of the cutting-edge part 120 opposite to the cutting edge thereof. The cutting-edge part 120 and the insert part 130 are connected so as to form an obtuse angle. For example, when viewed in the Y-axis direction, the cutting-edge part 120 and the insert part 130 may form an obtuse angle of 130°C.

The insert member 140, which includes the cutting-edge part 120 and the insert part 130, may be formed as one integral component, or may be formed by joining the cutting-edge part 120 with the insert part 130. The insert member 140 may include a hardened layer such as a TiC cermet as its material. Note that the insert member 140 is not limited to those containing a TiC cermet as its component, but may contain other metals, ceramics, or resins. For example, the insert member 140 may contain a metal such as stainless steel.

Further, the cutting-edge part 120 and the insert part 130 of the insert member 140 may contain materials different from each other. For example, the cutting-edge part 120 may contain a TiC cermet as its material, and the insert part 130 may contain, as its material, a material containing a metal, a material containing a resin, a material containing ceramic, a material containing fibers or the like, or a resin or the like containing a filler.

The cutting-edge part 120 is a part that slides over the plate surface 204. The cutting-edge part 120 slides along the plate surface 204 of the die plate 201, the plate surface 204 having the holes 205 formed therein, and thereby cuts a plurality of pieces of the material 206 extruded from the holes 205 onto the plate surface 204. The cutting-edge part 120 is, for example, a plate-like element extending in the Y-axis direction. When the part of the cutting-edge part 120 that is connected to the insert part 130 is referred to as a connection surface 120d, the cutting-edge part 120 includes a sliding surface 120a, an inclined surface 120c, a connection surface 120d, and a dug-in surface 120e. The cutting-edge part 120 is, for example, a plate-like element extending in the Y-axis direction, with the inclined surface 120c and the dug-in surface 120e being its plate surfaces, and the sliding surface 120a and the connection surface 120d being its end faces.

The sliding surface 120a slides over the plate surface 204. As the sliding surface 120a slides over the plate surface 204, a plurality of pieces of the material 206 extruded from the holes 205 onto the plate surface 204 are cut by the cutting edge. The sliding surface 20a is shaped so as to conform to the shape of the plate surface 204 so that the plate surface 204 can slide thereover. In the case where the plate surface 204 is planar (i.e., flat), the sliding surface 20a is also planar (i.e., flat). In the case where the plate surface 204 is curved, the sliding surface 20a is curved in conformity with the curvature of the plate surface 204.

The sliding surface 120a is flush with the bottom surface 111a of the attaching part 111 in the main part 110. Therefore, the main part 110 has the bottom surface 111a flush with the sliding surface 120a. As a result, the insert member 140 can be easily positioned (i.e., aligned). For example, the insert member 140 can be easily aligned with the main part 110 when the insert member 140 is inserted into the main part 110. Further, when inset molding is performed, the insert member 140 can be easily positioned (or aligned) inside the mold.

The inclined surface 120c is inclined with respect to the sliding surface 120a. For example, the inclined surface 120c is inclined by 50 [deg] with respect to the sliding surface 120a. The cutting edge is formed by the sliding surface 120a and the inclined surface 120c. That is, the angle between the sliding surface 120a and the inclined surface 120c forms the cutting edge.

The dug-in surface 120e is a surface opposed to the inclined surface 120c. The dug-in surface 120e may be, for example, curved in a concave shape. The dug-in surface 120e may be smoothly connected to the dug-in surface 112e. Further, the dug-in surface 120e is in contact with a part of the ridge part 115 located below the groove 114 in the front surface 115c.

The insert part 130 is, for example, a plate-like element. The insert part 130 extends in the Y-axis direction. When the part of the insert part 130 that is connected to the cutting-edge part 120 is referred to as a connection surface 130d, the insert part 130 includes a first surface 130a, a second surface 130b, a connection surface 130d, and an edge surface 130e. The first surface 130a faces in the -Z axis direction. The second surface 130b faces in the +Z axis direction. Therefore, the second surface 130b is opposed to the first surface 130a. The edge surface 130e is connected to the peripheral edge of the first surface 130a and the peripheral edge of the second surface 130b. The insert part 130 is a plate-like element extending in the Y-axis direction, with the first and second surfaces 130a and 130b being its plate surfaces, and the edge surface 130e and the connection surface 130d being its end faces.

The insert part 130 is disposed inside the groove 114 of the main part 110. The main part 110 supports the insert member 140 by sandwiching the insert part 130 therein. Therefore, the ridge part 115 has the groove 114 in which the insert part 130 is sandwiched. Note that each of the ridge part 115 and the attaching part 111 may have the groove 114 in which the insert part 130 is sandwiched. For example, the main part 110 may support the insert member 140 by sandwiching the first and second surfaces 130a and 130b therein. The edge surface 130e, which is opposed to the part of the insert part 130 to which the cutting-edge part 20 is connected, is in contact with the bottom surface of the groove 14 of the main part 10. Further, the ridge part 115 of the main part 110 may be in contact with the insert part 130 in the groove 114, and the part of the ridge part 115 below the groove 114 of the front surface 115c may be in contact with the cutting-edge part 120.

The insert part 130 may extend to the groove 114 of the attaching part 111. In this case, holes 133 may be formed in the insert part 130. The holes 133 may communicate with (i.e., may be aligned with) the holes 113, and the insert part 130 may be fixed to the cutter blade holder part 202 by bolts. In the case where the insert member 140 is inserted into the main part 110, they may be configured so that the insert member 140 inserted into the main part 110 can be replaced with a new one.

### <Method for Manufacturing Cutter Blade>

Next, a method for manufacturing a cutter blade 1 according to this embodiment will be described. A cutter blade 1 may be manufactured by separately forming a main part 110 and an insert member 140, and then attaching the insert member 140 in a groove 114 of the main part 110. Alternatively, a cutter blade 1 may be manufactured by insert molding. Specifically, in the insert molding, a cutter blade 1 is manufactured by placing an insert member 140 inside a mold, and charging and solidifying a molten resin inside the mold. In this case, the main part 110 may contain a resin as its material. Note that when the insert molding is performed, the molding is not limited to resin molding (including molding of a resin and a filler), but may be metal molding or ceramic molding. A manufacturing method in which an insert member 140 is attached in a groove 114 of a main part 110, and a manufacturing method using insert molding will be described hereinafter.

### <Method for Manufacturing Cutter Blade in which Insert Member is Attached in Groove of Main Part>

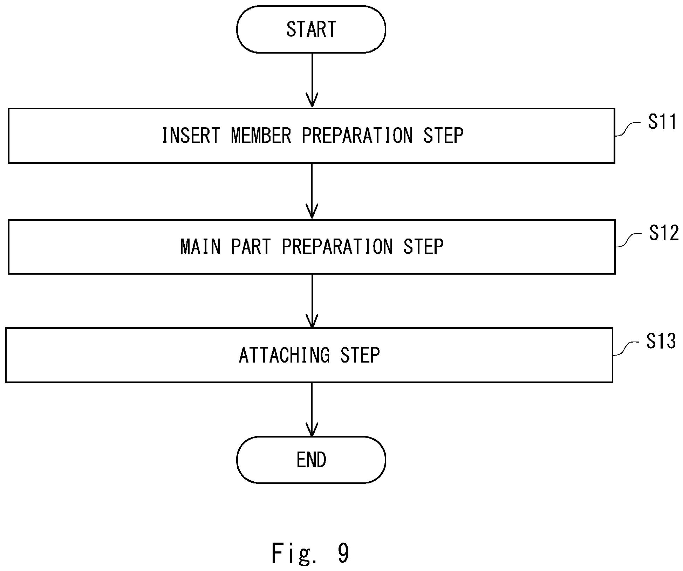

Fig. 9 is a flowchart showing an example of one of methods for manufacturing a cutter blade according to the first embodiment, in which an insert member 140 is attached in a groove 114 of a main part 110. As shown in Fig. 9, the method for manufacturing a cutter blade 1 in which an insert member 140 is attached in a groove 114 of a main part 110 includes an insert member preparation step (Step S11), a main part preparation step (Step S12) and an attaching step (Step S13). Note that the order of the insert member preparation step and the main part preparation step may be interchanged. That is, the main part preparation step may be performed in the step S11, and the insert member preparation step may be performed in the step S12.

Firstly, as shown in the step S11, an insert member 140 is prepared in the insert member preparation step. The insert member 140 may be formed by injection molding or by using a 3D (three-dimensional) printer. The insert member 140 may contain, as its material, a metal, a resin (which may contain a filler), or ceramic as in the case of a TiC cermet or the like. The insert member 140 is formed so as to include a cutting-edge part 120 and an insert part 130.

The cutting-edge part 120 slides along the plate surface 204 of the die plate 201, the plate surface 204 having the holes 205 formed therein, and thereby cuts a plurality of pieces of a material 206 extruded from the holes 205 onto the plate surface 204. The insert part 130 is connected to the cutting-edge part 120.

In the insert member preparation step, the insert part 130 may have a first surface 130a and a second surface 130b opposed to the first surface 130a. Further, the insert part 130 may have an edge surface 130e connected to the peripheral edge of the first surface 130a and the peripheral edge of the second surface 130b. The cutting-edge part 120 may have a sliding surface 120a that slides over the plate surface 204. The cutting-edge part 120 and the insert part 130 of the insert member 140 may contain, as materials different from each other, a metal, a resin (which may contain a filler), or ceramic as in the case of a TiC cermet or the like.

Next, as shown in the step S12, a main part 110 is prepared in the main part preparation step. The main part 110 may be formed by injection molding or by using a 3D printer. In the main part preparation step, the main part 110 may contain, as its material, a metal, a resin (which may contain a filler), or ceramic. The main part 110 may have a bottom surface 111a. Further, the main part 110 may include an attaching part 111 connected to the cutter blade holder part 202 which transmits the power for sliding the cutter blade 1 along the plate surface 204, and a ridge part 115. Further, the main part 110 may have a groove 114. For example, the ridge part 115 and the attaching part 111 may have a groove 114 in which the insert part 130 is sandwiched.

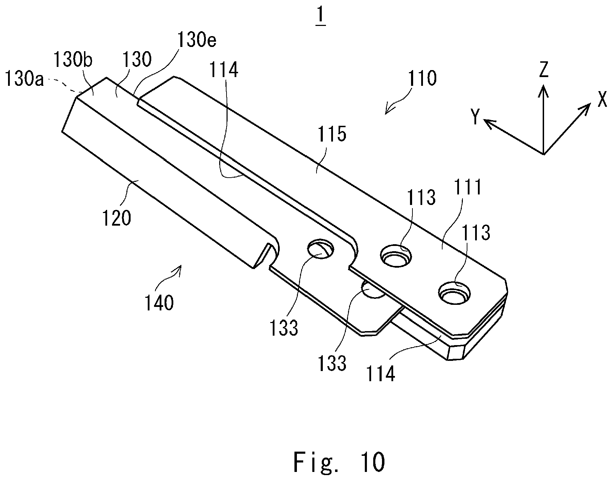

Fig. 10 shows an example of the attaching step of attaching the insert member 140 to the main part 110 in the method for manufacturing the cutter blade 1 according to the first embodiment.

Next, as shown in a step S13 in Fig. 9 and in Fig. 10, in the attaching step, the insert member 140 is attached to the main part 110. Specifically, the insert member 140 is attached to the main part 110 so that the insert member 140 is supported in such a manner that the first and second surfaces 130a and 130b of the insert part 130 are sandwiched therein. For example, the insert part 130 is inserted into the groove 114, so that the first and second surfaces 130a and 130b are sandwiched therein. The edge surface 130e opposed to the part of the insert part 130 to which the cutting-edge part 120 is connected may be in contact with the main part 110 at the bottom of the groove 114. Further, the ridge part 115 may be in contact with the dug-in surface 120e of the cutting-edge part 120 in the front surface 115c. The holes 113 and the holes 133 may be connected to (i.e., aligned with) each other, so that the above-described components are fixed by bolts.

The insert member 140 may be attached to the main part 110 in such a manner that the insert member 140 can be replaced with a new one. For example, the insert member 140 is attached to the main part 110 by using bolts when the insert member 140 is attached to the main part 110. Further, the main part 110 may be attached in such a manner that the main part 110 has a bottom surface 111a that is flush with the sliding surface 120a. Specifically, the bottom surface 111a of the attaching part 111 is attached so that the bottom surface 111a is flush with the sliding surface 120a. Through the above-described processes, the cutter blade 1 can be manufactured.

### <Method for Manufacturing Cutter Blade by Insert Molding>

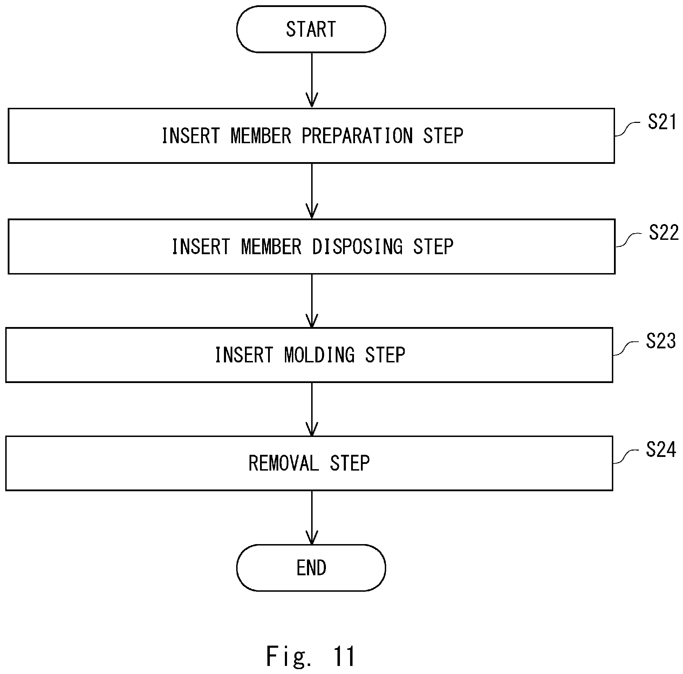

Fig. 11 is a flowchart showing an example of one of methods for manufacturing a cutter blade according to the first embodiment, in which insert molding is performed. As shown in Fig. 11, the method for manufacturing a cutter blade 1 by performing insert molding includes an insert member preparation step (Step S21), an insert member disposing step (Step S22) of disposing an insert member 140 in a cavity of a mold, an insert molding step (Step S23) of performing insert molding by charging a material containing at least one of a molten resin, a molten metal, and a ceramic powder in the cavity, and solidifying the charged material, and a removal step (Step S24) of removing a cutter blade 1 from the mold.

Firstly, as shown in the step S21 in Fig. 11, an insert member 140 is prepared in the insert member preparation step. The step S21 is similar to the step S11 in Fig. 9. Note that in the case of insert molding, the insert member 140 preferably contains a metal as its material.

Then, as shown in the step S22, the insert member 140 is disposed in the cavity of the mold in the insert member disposing step.

Then, as shown in a step S23, a material containing at least one of a molten resin, a molten metal, and a ceramic powder is charged in the cavity of the mold, in which the insert member 140 has already been disposed, and the charged material is solidified in the insert molding step. In this way, the insert molding is performed. By the insert molding, the insert member 140 is supported by sandwiching the insert part 130, and the main part 110 containing at least one of a resin, a metal, and ceramic as its material is molded.

Next, as shown in step S24, a cutter blade 1 including the insert member 140 and the main part 110 is removed from the mold in the removal step. Through the above-described processes, the cutter blade 1 can be manufactured.

Next, a comparative example will be described before describing advantageous effects of the above-described embodiment. After that, the advantageous effects of the above-described embodiment will be described while comparing them with those of the comparative example.

### (Comparative Example)

For example, as a comparative example, in the case of a cutter blade disclosed in Patent Literature 1 or the like, it is conceivable to join a hardened layer to the cutter blade by brazing in order to improve the durability of its cutting edge. However, since the cutter blade needs to be heated to about 1,000°C to carry out the brazing, its cutting edges are deformed. Since additional machining needs to be performed to correct the deformation of the cutting edge, the manufacturing cost increases.

Further, since the brazing has to be carried out in a furnace, a worker or the like cannot see a series of processes. Therefore, any direct work related to the quality of the brazed part cannot be performed, thus making it difficult to control the yield of the brazing.

Further, the hardened layer worn due to friction and the like cannot be replaced. Therefore, when the cutter blade is used for a certain period of time, it has to be scrapped. Therefore, the manufacturing cost increases.

Next, advantageous effects of this embodiment will be explained. The cutter blade 1 according to this embodiment supports the insert member 140 by sandwiching it in the main part 110. Therefore, there is no need to heat the insert member 140 and the main part 110, which would be necessary in the case of brazing, so that it is possible to prevent them from being deformed. As a result, additional machining, which would otherwise need to be performed to correct the deformation of the insert member 140 and the main part 110, is not required, so that the manufacturing cost can be greatly reduced.

In the case where the main part 110 contains a resin as its material, the weight of the cutter blade 1 can be reduced. As a result, the electric power that is consumed during the operation of the granulation apparatus can be reduced.

In the case where the insert member 140 is disposed in the cavity of the mold and the cutter blade 1 is manufactured by insert molding, an inexpensive resin can be used as the raw material, so that the manufacturing cost can be reduced.

The sliding surface 120a of the cutting-edge part 120 and the bottom surface 111a of the main part 110 may be made flush with each other. In this way, when the cutter blade 1 is slid over the plate surface 204, it can be slid without resistance. Further, the insert member 140 can be easily aligned with the main part 110 when the insert member 140 is attached to the main part 110. For example, the main part 110 and the insert member 140 can be aligned with each other over a flat surface, and can be bonded to each other. Further, in the case of insert molding, the insert member 140 can be easily positioned (or aligned) when the insert member 140 is disposed in the cavity of the mold.

The groove 114 may be continuously formed from the attaching part 111 to the ridge part 115 in the main part 110, and the insert part 130 may be sandwiched therein by the attaching part 111 and the ridge part 115. In this way, it is possible to firmly support the insert member 140. Further, since the insert member is supported by sandwiching the first and second surfaces 130a and 130b of the insert part 130, the insert member 140 can be firmly supported. The edge surface 130e of the insert part 130 is in contact with the bottom surface of the groove 114 of the main part 110. As a result, the insert member 140 can be supported more firmly.

### (Second Embodiment)

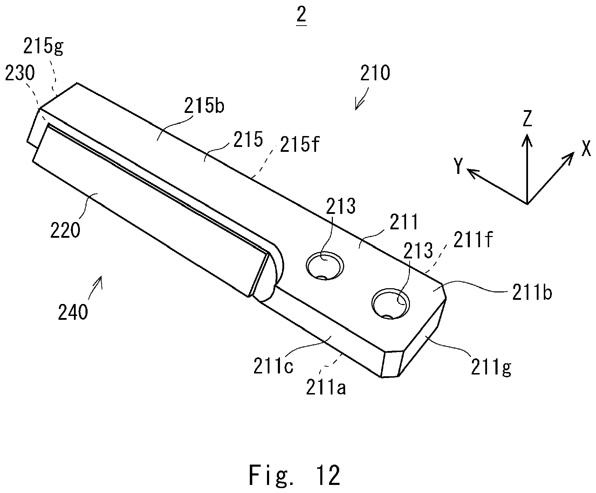

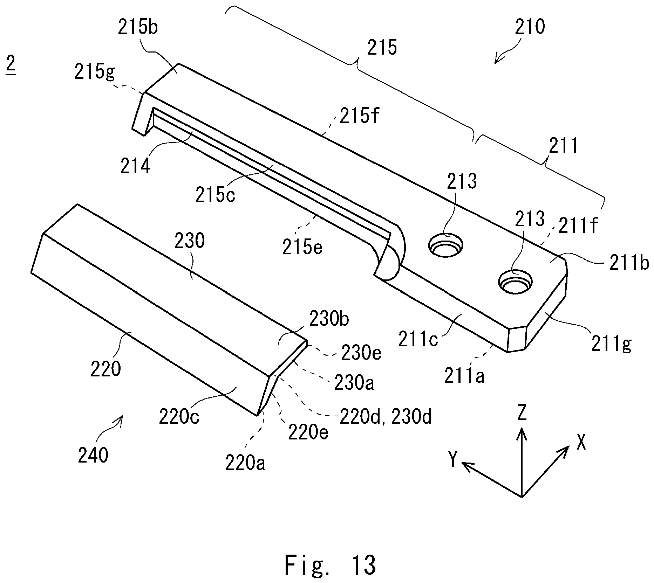

Next, a cutter blade according to a second embodiment will be described. The shape of the insert part of the insert member of the cutter blade according to this embodiment differs from that in the first embodiment. Fig. 12 is a perspective view showing an example of a cutter blade 2 according to the second embodiment. Fig. 13 is an exploded perspective view showing the example of the cutter blade 2 according to the second embodiment. As shown in Figs. 12 and 13, the cutter blade 2 according to this embodiment includes a main part 210 and an insert member 240.

### <Main Part>

The main part 210 includes an attaching part 211 and a ridge part 215. The attaching part 211 and the ridge part 215 are connected to each other in the Y-axis direction. The attaching part 211 is formed, for example, in a part of the main part 210 on the -Y axis direction side thereof. The attaching part 211 has, for example, a quadrangular prism shape, and has a bottom surface 211a, an upper surface 211b, a front surface 211c, and a rear surface 211f. Holes 213, which are used to fix the cutter blade 2 to the cutter blade holder part 202, are formed in the attaching part 211. In contrast to the first embodiment, no groove for holding the insert member 240 is formed in the attaching part 211. That is, neither of the front surface 211c and the end face 211g has a groove.

The ridge part 215 is formed, for example, in a part of the main part 210 on the +Y axis direction side thereof. In this way, the ridge part 215 connects to the +Y axis direction side of the attaching part 211. The ridge part 215 has an upper surface 215b, a front surface 215c, a dug-in surface 215e, and a rear surface 215f. A groove 214 for holding the insert member 240 is formed in front surface 215c. The groove 214 extends in the Y-axis direction in the front surface 215c. That is, the mouth of the groove 214 in the front surface 215c extends in the Y-axis direction. The groove 214 is formed (i.e., extends) in the +X axis direction from the mouth in the front surface 215c. The bottom of the groove 214 is opposed to the rear surface 215f. As described above, in this embodiment, the groove 214 is formed in the front surface 215c of the ridge part 215. Further, the groove 214 does not need to be formed in the end face 215g of the ridge part 215.

The insert member 240 includes a cutting-edge part 220 and an insert part 230. The cutting-edge part 220 has a sliding surface 220a, an inclined surface 220c, a connection surface 220d, and a dug-in surface 220e. The insert part 230 has a first surface 230a, a second surface 230b, a connection surface 230d, and an edge surface 230e. In this embodiment, the insert part 230 is disposed inside the groove 214 of the ridge part 215. In contrast to the first embodiment, the insert part 230 does not extend to the attaching part 211. The rest of the configuration of the cutter blade 2 according to this embodiment is similar to that in the first embodiment. Further, a method for manufacturing a cutter blade 2 according to this embodiment is similar to that according to the first embodiment except that the shapes of the groove 214 and the insert part 230 are different from those in the first embodiment.

According to the cutter blade 2 in accordance with this embodiment, since the size of the insert part 230 can be reduced, the manufacturing cost can be reduced in the case where a metal such as a TiC cermet is used for the insert part 230. Further, the weight of the cutter blade 2 can be further reduced, so that the power consumption can be reduced.

### (Third Embodiment)

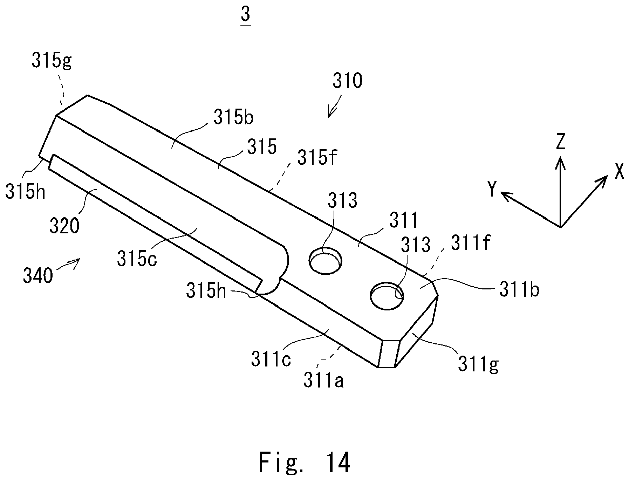

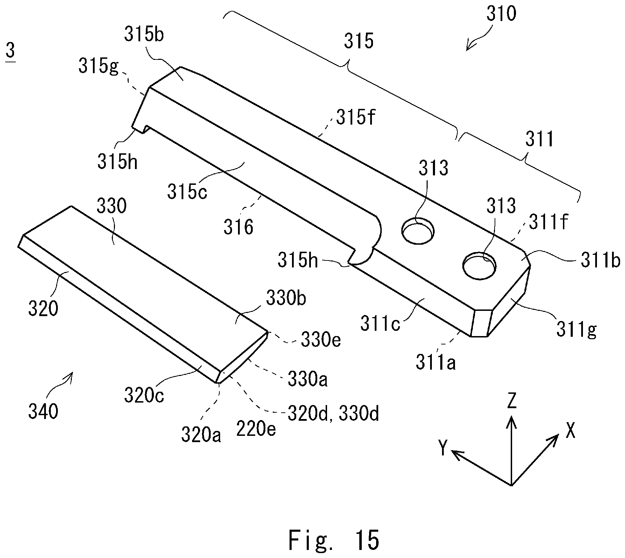

Next, a cutter blade according to a third embodiment will be described. The shape of the cutting-edge part of the insert member of the cutter blade according to this embodiment differs from those in the first and second embodiments. Fig. 14 is a perspective view showing an example of a cutter blade 3 according to the third embodiment. Fig. 15 is an exploded perspective view showing the example of the cutter blade 3 according to the third embodiment. As shown in Figs. 14 and 15, the cutter blade 3 according to this embodiment includes a main part 310 and an insert member 340.

### <Main Part>

The main part 310 includes an attaching part 311 and a ridge part 315. The attaching part 311 and the ridge part 315 are connected to each other in the Y-axis direction. The attaching part 311 is formed, for example, in a part of the main part 310 on the -Y axis direction side thereof. The attaching part 311 has, for example, a quadrangular prism shape, and has a bottom surface 311a, an upper surface 311b, a front surface 311c, and a rear surface 311f. Holes 313, which are used to connect the cutter blade 3 to the cutter blade holder part 202, are formed in the attaching part 311. In contrast to the first embodiment, no groove for holding the insert member 340 is formed in the attaching part 311. That is, neither of the front surface 311c and the end face 311g has a groove.

The ridge part 315 is formed, for example, in a part of the main part 310 on the +Y axis direction side thereof. In this way, the ridge part 315 is connected to the +Y axis direction side of the attaching part 311. The ridge part 315 has an upper surface 315b, a front surface 315c, a lower surface 315h, and a rear surface 315f. In contrast to the first and second embodiments, no groove for holding the insert member 240 is formed in the ridge part 315. Therefore, neither of the front surface 315c of the ridge part 315 and the end face 315g thereof has a groove. Further, in contrast to the first and second embodiments, the ridge part 315 does not have a dug-in surface, but has the lower surface 315h. Further, a stepped surface 316 is formed in the lower surface 315h.

The stepped surface 316 is recessed in the +Z axis direction further than the lower surface 315h (i.e., recessed beyond the lower surface 315h). The lower surface 315h surrounds the stepped surface 316 in a U-shape with the side in the -X axis direction side being opened. The lower surface 315h extends in the X-axis direction on the +Y axis direction side of the stepped surface 316, extends in the Y-axis direction on the +X axis direction side of the stepped surface 316, and extends in the X-axis direction on the -Y axis direction side of the stepped surface 316.

The insert member 340 includes a cutting-edge part 320 and an insert part 330. The cutting-edge part 320 has a sliding surface 220a, an inclined surface 320c, a connection surface 320d, and a dug-in surface 320e. The insert part 330 has a first surface 330a, a second surface 330b, a connection surface 330d, and an edge surface 330e. In this embodiment, the second surface 330b of the insert part 330 is in contact with the stepped surface 316 of the ridge part 315. For example, the second surface 330b of the insert part 330 may be joined to the stepped surface 316 of the ridge part 315. Further, the step on the +Y axis direction side of the ridge part 315 and the step on the -Y axis direction side thereof may sandwich the insert part 330 therebetween in the Y-axis direction. In this way, the main part 310 supports the insert member 340 by sandwiching the insert part 330 therein in the Y-axis direction.

The rest of the configuration of the cutter blade 3 according to this embodiment is similar to those in the first and second embodiments. Further, a method for manufacturing a cutter blade 3 according to this embodiment is similar to those according to the first and second embodiments except that the shapes of the ridge part 315, the cutting-edge part 320, and the insert part 330 are different from those in the first and second embodiments.

According to the cutter blade 3 in accordance with this embodiment, since the size of the cutting-edge part 320 can be reduced, the manufacturing cost can be reduced in the case where a metal such as a TiC cermet is used for the cutting-edge part 320. Further, the weight of the cutter blade 3 can be further reduced, so that the power consumption can be reduced.

The present invention made by the inventors of the present application has been described above in a concrete manner based on embodiments. However, the present invention is not limited to the above-described embodiments, and needless to say, various modifications can be made without departing from the spirit and scope of the invention.

This application is based upon and claims the benefit of priority from Japanese patent application No. 2020-214766, filed on December 24, 2020, the disclosure of which is incorporated herein in its entirety by reference.

### Reference Signs List

1, 2, 3 CUTTER BLADE
110, 210, 310 MAIN PART
111, 211, 311 ATTACHING PART
111a, 211a, 311a BOTTOM SURFACE
111b, 211b, 311b TOP SURFACE
111c, 211c, 311c FRONT SURFACE
111f, 211f, 311f REAR SURFACE
111g, 211g, 311g END FACE
113, 213,313 HOLE
114,214 GROOVE
115, 215, 315 RIDGE PART
115b, 215b, 315b TOP SURFACE
115c, 215c, 315c FRONT SURFACE
115e, 215e DUG-IN SURFACE
115f, 215f, 315f REAR SURFACE
115g, 215g, 315g END FACE
120, 220, 320 CUTTING-EDGE PART
120a, 220a, 320a SLIDING SURFACE
120c, 220c, 320c INCLINED SURFACE
120d, 220d, 320d CONNECTION SURFACE
120e, 220e, 320e DUG-IN SURFACE
130, 230, 330 INSERT PART
130a, 230a, 330a FIRST SURFACE
130b, 230b, 330b SECOND SURFACE
130d, 230d, 330d CONNECTION SURFACE
130e, 230e, 330e EDGE SURFACE
133 HOLE
140, 240, 340 INSERT MEMBER
100 EXTRUSION APPARATUS
101 DRIVE UNIT
102 SPEED REDUCER
103 CYLINDER
104 SCREW
200 UNDERWATER GRANULATION APPARATUS
201 DIE PLATE
202 CUTTER BLADE HOLDER PART
203 DRIVE UNIT
204 PLATE SURFACE
205 HOLE
206 MATERIAL
315h LOWER SURFACE
316 STEPPED SURFACE

## Claims

1. A cutter blade comprising:
an insert member comprising a cutting-edge part configured to slide along a plate surface of a die plate, the plate surface having a hole formed therein, and thereby to cut a material extruded from the hole onto the plate surface, and an insert part having a first surface and a second surface opposed to the first surface, the insert part being connected to the cutting-edge part; and
a main part configured to support the insert member by sandwiching the first and second surfaces.

2. The cutter blade according to Claim 1, wherein
the insert member contains a metal as its material, and
the main part contains at least one of a resin, a metal, and ceramic as its material.

3. The cutter blade according to Claim 1 or 2, wherein the insert part has an edge surface connected to a peripheral edge of the first surface and a peripheral edge of the second surface, and the edge surface, which is opposed to a part of the insert part to which the cutting-edge part is connected, is in contact with the main part.

4. The cutter blade according to any one of Claims 1 to 3, wherein the insert member supported by the main part can be replaced.

5. A cutter blade comprising:
an insert member comprising a cutting-edge part configured to slide along a plate surface of a die plate, the plate surface having a hole formed therein, and thereby to cut a material extruded from the hole onto the plate surface, and an insert part connected to the cutting-edge part, the insert member containing a metal as its material; and
a main part configured to support the insert member by sandwiching the insert part, the main part containing at least one of a resin, a metal, and ceramic as its material.

6. The cutter blade according to any one of Claims 1 to 5, wherein
the cutting-edge part has a sliding surface configured to slide over the plate surface, and
the main part has a bottom surface that is flush with the sliding surface.

7. The cutter blade according to Claim 6, wherein
the main part comprises:
an attaching part configured to be connected to a cutter blade holder part configured to transmit power for sliding the cutter blade along the plate surface; and
a ridge part in contact with the cutting-edge part, and
a bottom surface of the attaching part is flush with the sliding surface.

8. The cutter blade according to Claim 7, wherein the ridge part and the attaching part have a groove in which the insert part is sandwiched.

9. A granulation apparatus comprising:
a cutter blade according to any one of Claims 1 to 8;
a cutter blade holder part to which the cutter blade is connected;
and
the die plate.

10. A method for manufacturing a cutter blade, comprising:
an insert member preparation step of preparing an insert member, the insert member comprising a cutting-edge part configured to slide along a plate surface of a die plate, the plate surface having a hole formed therein, and thereby to cut a material extruded from the hole onto the plate surface, and an insert part having a first surface and a second surface opposed to the first surface, the insert part being connected to the cutting-edge part;
a main part preparation step of preparing a main part; and
an attaching step of attaching the insert member to the main part so that the insert member is supported in such a manner that the first and second surfaces are sandwiched in the main part.

11. The method for manufacturing a cutter blade according to Claim 10, wherein
the insert member contains a metal as its material, and
the main part contains at least one of a resin, a metal, and ceramic as its material.

12. The method for manufacturing a cutter blade according to Claim 10 or 11, wherein the insert part has an edge surface connected to a peripheral edge of the first surface and a peripheral edge of the second surface, and the edge surface, which is opposed to a part of the insert part to which the cutting-edge part is connected, is in contact with the main part.

13. The method for manufacturing a cutter blade according to any one of Claims 10 to 12, wherein the insert member supported by the main part can be replaced.

14. A method for manufacturing a cutter blade, comprising:
an insert member preparation step of preparing an insert member comprising a cutting-edge part configured to slide along a plate surface of a die plate, the plate surface having a hole formed therein, and thereby to cut a material extruded from the hole onto the plate surface, and an insert part connected to the cutting-edge part, the insert member containing a metal as its material;
an insert member disposing step of disposing the insert member in a cavity of a mold; and
an insert molding step of: charging a material containing at least one of a molten resin, a molten metal, and a ceramic powder in the cavity, solidifying the material, and thereby supporting the insert member by sandwiching the insert part; and molding a main part containing at least one of a resin, a metal, and ceramic as its material; and
a removal step of removing a cutter blade comprising the insert member and the main part from the mold.

15. The method for manufacturing a cutter blade according to any one of Claims 10 to 14, wherein
the cutting-edge part has a sliding surface configured to slide over the plate surface, and
the main part has a bottom surface that is flush with the sliding surface.

16. The method for manufacturing a cutter blade according to Claim 15, wherein
the main part comprises:
an attaching part configured to be connected to a cutter blade holder part configured to transmit power for sliding the cutter blade along the plate surface; and
a ridge part in contact with the cutting-edge part, and
a bottom surface of the attaching part is flush with the sliding surface.

17. The method for manufacturing a cutter blade according to Claim 16, wherein the ridge part and the attaching part have a groove in which the insert part is sandwiched.
